# DEMANDE DE BREVET EUROPEEN

(11) **EP 3 945 685 A1**
(43) Date de publication de la demande: **02.02.2022**
(21) Numéro de dépôt: 21187705.5
(22) Date de dépôt: 26.07.2021
(51) Int. Cl.: H04B 7/06, H04B 7/08, H01Q 3/38

(54) **NOEUD DE CONTROLE A CONSTELLATION VECTORIELLE OCTOGONALE POUR ANTENNE RESEAU**

(30) Priorité: 30.07.2020 FR 2008056
(71) Demandeur: THALES, 92400 Courbevoie (FR); CENTRE NATIONAL D'ETUDES SPATIALES, 75039 Paris Cedex 01 (FR)
(72) Inventeur: ADAM, Thierry, 31037 TOULOUSE CEDEX 1 (FR); ROCHETTE, Stéphane, 31037 TOULOUSE CEDEX 1 (FR); THEROND, Benjamin, 31037 TOULOUSE CEDEX 1 (FR)
(74) Mandataire: Marks & Clerk France

(57) **Abrégé**

L'invention concerne un nœud contrôle pour antenne réseau (103) configuré pour appliquer une atténuation et un déphasage à un signal radiofréquence en fonction d'un signal de commande, un réseau de formateurs de faisceaux, une antenne réseau et un satellite comprenant le nœud de contrôle. Il comprend
- un diviseur quadratique (301) délivrant un signal en phase et un signal en quadrature de phase sur des voies de transmission distinctes,
- un combineur (306) configuré pour sommer des signaux transmis sur deux des voies de transmission,
chaque voie de transmission comprenant au moins :
- une cellule d'atténuation (302, 303) activée en fonction de la valeur d'un bit dédié (310, 311) du signal de commande, et
- une cellule de déphasage (501, 502) configurée pour appliquer un déphasage fixe, activée en fonction du résultat d'une logique combinatoire (503, 504) opérée sur des bits du signal de commande (312, 313).

## Description

### Domaine technique :

L'invention se situe dans le domaine des transmissions radiofréquences (RF), et porte plus particulièrement sur un dispositif de commande de l'amplitude et de la phase d'un signal RF, ou nœud de contrôle, utilisé au sein d'un réseau de formateurs de faisceaux (en anglais « beamforming network ») pour antennes réseau. De telles antennes réseau sont utilisées en particulier pour les communications satellitaires ou pour les dispositifs 5G (cinquième génération de standard pour la téléphonie mobile).

### Technique antérieure :

Les antennes réseau, actives ou passives, sont composées d'une pluralité d'éléments rayonnants configurés pour émettre ou recevoir un signal RF. L'amplitude et la phase du signal émis (lorsque l'antenne est utilisée en émission) ou reçu (lorsque l'antenne est utilisée en réception) par chaque élément rayonnant sont ajustées de manière à pointer le faisceau de l'antenne dans la direction souhaitée.

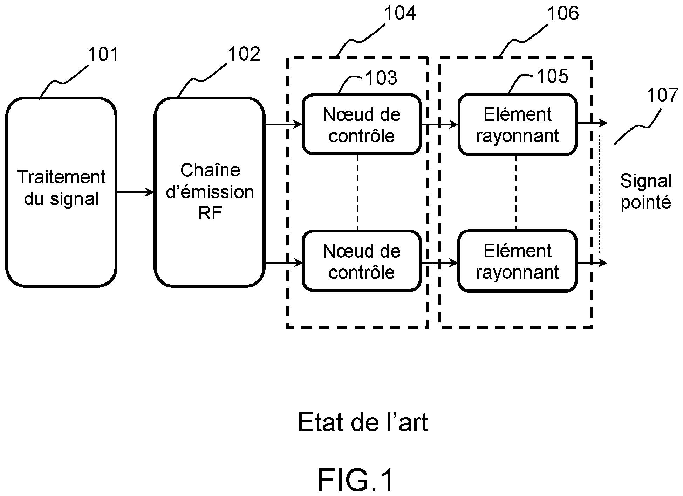

La figure 1 représente sommairement les principaux éléments d'une chaîne de transmission comprenant une antenne réseau, à l'émission. A l'émission, le signal est mis en forme par différents algorithmes 101 de traitement du signal (modulation, codage, entrelacement, etc...) en fonction du standard de communications, puis converti en analogique et amplifié par la chaîne d'émission 102. Le signal RF généré est transmis à N nœuds de contrôle unitaires 103, formant ensemble un réseau de formateurs de faisceaux 104. Chaque nœud de contrôle est configuré pour appliquer au signal un déphasage et une atténuation particulière donnée par un signal de commande. Le signal RF ainsi modifié est ensuite émis par un élément rayonnant particulier 105 de l'antenne réseau 106. Le choix des amplitudes/phases appliqués par les nœuds de contrôle permet de piloter le diagramme de rayonnement de l'antenne. En réception, le principe est le même : le signal RF reçu par chacun des éléments rayonnants est transmis à des nœuds de contrôle configurés pour leur appliquer une amplitude et une phase particulière. Les signaux résultants sont traités par une chaîne de réception RF puis des moyens de calcul en charge de l'application de différents algorithmes 101 de traitement du signal (démodulation, décodage, désentrelacement, etc...). Le diagramme de rayonnement de l'antenne, à l'émission comme à la réception, dépend du nombre d'éléments rayonnants et de leurs dispositions respectives. Ainsi, les antennes embarquées à bord des satellites comprennent généralement plusieurs dizaines d'éléments rayonnants.

On retrouve les antennes réseau, et par conséquent des réseaux de formateur de faisceaux, entre autre pour les applications satellites bord, afin de créer des spots satellitaires, mais également pour les composants BFIC (acronyme anglais pour *Beam Forming Integrated Circuit,* ou circuit intégré pour la formation de faisceaux), composants de nouvelle génération émergeant avec la mise en place de la 5G, qui s'appuient largement sur la formation de faisceaux pour améliorer les bilans de liaison. Que ce soit pour les applications satellite ou pour les applications 5G, il est nécessaire de miniaturiser au mieux les antennes réseau. Cela passe en particulier par la miniaturisation des nœuds de contrôle, qui sont des éléments dimensionnants de par leur nombre, en termes de masse, de volume et d'efficacité énergétique. Cette miniaturisation est obtenue, entre autres, par une implémentation en technologie silicium ou à base de mélanges silicium/germanium, qui offrent de bonnes performances RF, ainsi qu'une faible consommation, un faible coût, et sont adaptés pour une production de masse.

Chaque nœud de contrôle est piloté par un signal de commande numérique : pour chaque nœud, il existe donc un nombre fini d'états d'amplitude/phase pouvant être obtenus. L'ensemble de ces états forme une constellation de points. Par exemple, pour une configuration de commande de 16 bits, la constellation de points comprend 65536 états différents d'amplitude/phase.

La plupart des systèmes actuels sont basés sur une configuration de commande à 16 bits, soit 2¹⁶ = 65536 états d'amplitude/phase, format compatible avec les dispositifs standards d'adressage série-parallèle, de stockage mémoire des mots de commande et de calibrage de l'antenne réseau. Certains contextes applicatifs (orbite satellite basse, bande fréquentielle relative élevée, ...) demandent une réduction de la taille de la commande à 14 bits, soit 2¹⁴ = 16384 états d'amplitude/phase, de manière à réserver 2 bits parmi les 16 disponibles pour le réglage du paramètre « temps de propagation de groupe ».

Les nœuds de contrôle doivent répondre à des spécifications de résolution concernant la constellation d'états. Par exemple, la consigne de phase doit généralement permettre de balayer 360° par pas de taille constante, et la dynamique d'amplitude doit être importante (typiquement supérieure à 20dB).

A cet effet, il est connu de l'état de l'art antérieur des nœuds de contrôle basés sur des topologies dites « polaires », à pas de commande fixe en amplitude et en phase.

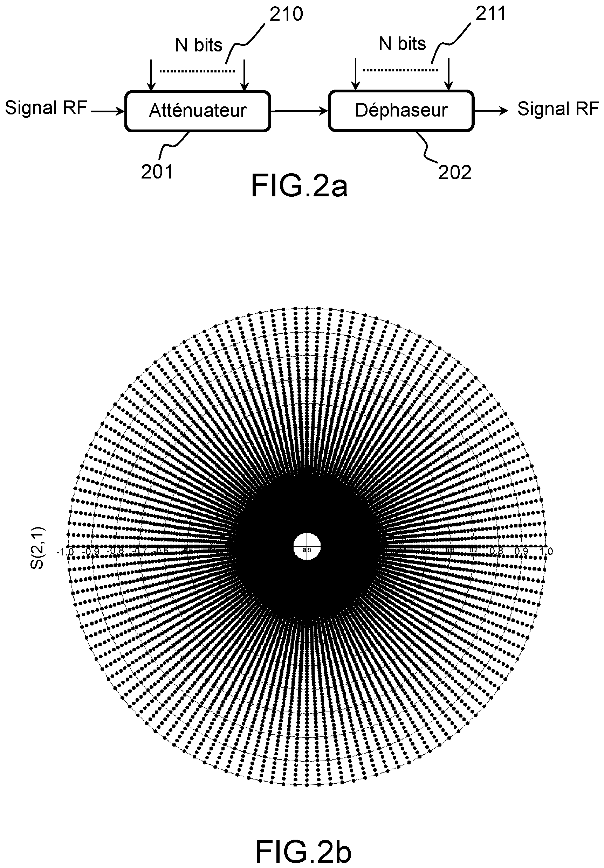

La figure 2a est une représentation synoptique d'un nœud de contrôle unitaire à topologie polaire piloté par un signal de commande sur 2N bits. Le nœud de contrôle comprend un atténuateur 201, composé de cellules d'atténuation successives, configuré pour atténuer le signal RF d'entrée en fonction de la valeur de N bits 210 du signal de commande, et un déphaseur 202 configuré pour appliquer au signal RF atténué un déphasage en fonction de la valeur des N autres bits 211 du signal de commande. La position de l'atténuateur 201 et du déphaseur 202 peuvent être inversées.

Dans les exemples décrits ici et par la suite, les signaux de commande considérés sont de taille 2N = 14 bits. Ce format est donné à titre d'illustration non limitative. Dans ce cas, N = 7 bits sont dédiés au contrôle de l'atténuateur 201, composé de 7 cellules d'atténuation consécutives. Chaque cellule est commutée dans un état actif ou inactif par un bit dédié du signal de commande. Le niveau d'atténuation des cellules double pour chaque cellule, de manière à garantir une progression à pas constant en dB. Dans cet exemple, il est alors possible d'appliquer 2⁷ = 128 niveaux d'atténuation au signal RF.

En considérant MSB (sigle anglais pour « Most Significant Bit ») comme étant le bit de poids fort et LSB (sigle anglais pour « Least Significant Bit ») comme étant le bit de poids faible des N bits dédiés du signal de commande pour l'atténuateur, alors le pas d'atténuation est donné par l'atténuation de la cellule associée au LSB, tandis que l'atténuation de la cellule associée au MSB vaut 2^{N-1} fois ce pas. La dynamique d'amplitude totale de l'atténuateur vaut donc 2 * MSB - LSB = (2^{N} - 1) * LSB.

En outre, N = 7 autres bits 211 du signal de commande sont utilisés pour contrôler le déphaseur 202, ce qui permet d'appliquer 128 niveaux de déphasage distincts au signal, de préférence répartis uniformément pour couvrir les 360° de phase requis par le système antenne réseau. Le pas de phase vaut alors 360°/2^{N}.

En fonction des souhaits concernant la précision de phase et la dynamique d'amplitude recherchées, la répartition des bits de commande entre l'atténuateur et le déphaseur peut être modifiée.

La figure 2b représente la constellation d'états obtenue pour un nœud de contrôle utilisant une topologie polaire, dans le cas d'une constellation idéale, c'est-à-dire sans loi parasite, en choisissant 2N = 14 bits. La constellation couvre de manière homogène le cercle unité, qui correspond à une atténuation nulle, et est de pas constant en amplitude (en dB) et en phase.

Si la représentation polaire est parfaite d'un point de vue du fonctionnement du système de par l'homogénéité de la couverture, son implémentation en technologie silicium ou en silicium-germanium est très pénalisante en termes de surface et de compromis sur l'ensemble des performances électriques requises (caractéristiques RF critiques versus puissance de courant continu consommée).

C'est pourquoi il est également connu de l'état de l'art antérieur des nœuds de contrôle basés sur des topologies dites « vectorielles », à pas de commande fixe en amplitude sur les voies I et Q.

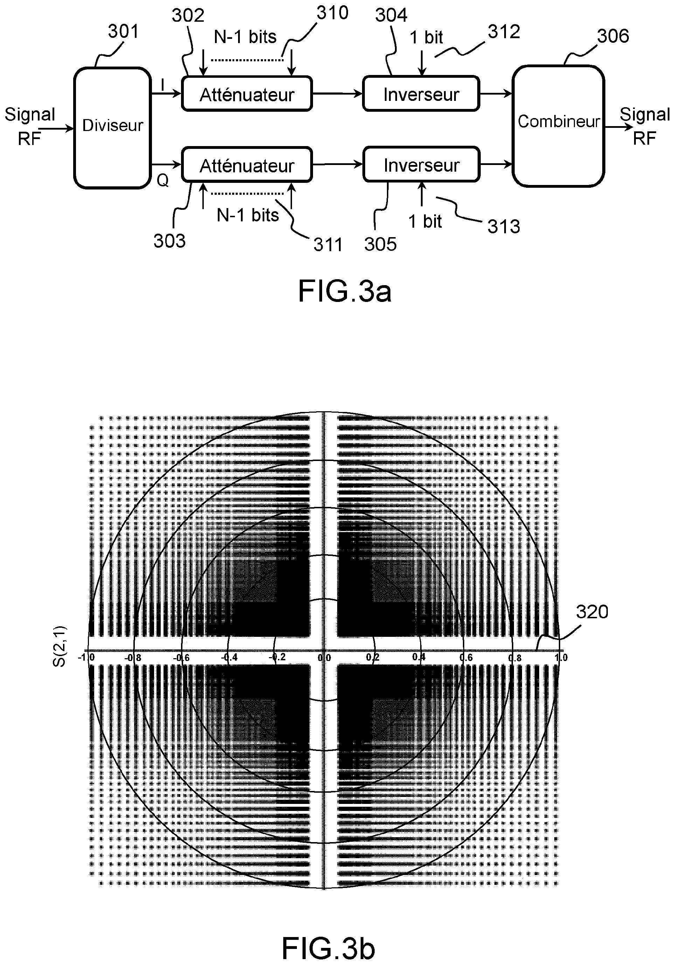

La figure 3a est la représentation synoptique d'un nœud de contrôle unitaire à topologie vectorielle piloté par un signal de commande à 2N = 14 bits. Le nœud de contrôle comprend un diviseur quadratique 301 configuré pour générer, à partir du signal RF, un signal en phase, communément dénommé voie I, et un signal en quadrature de phase, communément dénommé voie Q. Chaque voie comprend un atténuateur 302/303 configuré pour atténuer le signal de la voie en fonction de la valeur de N - 1 bits 310/311 du signal de commande, et un inverseur 304/305, configuré pour inverser ou non le signal transmis sur la voie en fonction de la valeur d'un bit 312/313 du signal de commande. Les deux signaux sont ensuite recombinés par un combineur 306. Le diviseur quadratique peut par exemple prendre la forme d'un coupleur utilisé en mode diviseur, configuré pour générer deux voies de sortie en quadrature de phase. Le combineur peut par exemple prendre la forme d'un coupleur utilisé en combineur dont les voies d'entrées sont en phase ou en opposition de phase.

Dans des variantes d'implémentation, la position des atténuateurs et des inverseurs sur chaque voie peut être permutée. De même, le diviseur quadratique 301 peut être configuré pour générer 4 voies : les voies *I* et *Q*, ainsi que leurs inverses *I̅* et *Q̅*. Chaque voie comprend alors un atténuateur, les atténuateurs d'une voie et de son inverse étant commandés par les mêmes bits du signal de commande (N - 1 bits 310 du signal de commande pour les voies *I* et *I̅*, et N - 1 bits 311 du signal de commande pour les voies Q et Q). Le combineur est alors configuré pour combiner deux voies parmi les quatre, sélectionnées à partir de deux bits du signal de commande.

En termes de surface d'implémentation, de performances en pertes d'insertion RF et en largeur de bande fréquentielle relative, la topologie vectorielle est très avantageuse par rapport à la topologie polaire, en particulier lorsque l'implémentation se fait en technologie silicium ou silicium-germanium.

La figure 3b représente la constellation d'états obtenue pour un nœud de contrôle utilisant une topologie vectorielle, dans le cas d'une constellation idéale, c'est-à-dire sans loi parasite, et pour un signal de commande sur 2N = 14 bits. Les atténuateurs 302/303 comprennent chacun N - 1 = 6 cellules d'atténuation consécutives, chaque cellule étant contrôlée par un bit dédié du signal de commande. L'atténuation réalisée par les cellules double d'une cellule à l'autre, de manière à réaliser une atténuation à pas constant en dB. Dans cet exemple, il est alors possible d'appliquer 64 niveaux d'atténuation au signal RF sur chaque voie, ce qui permet de décrire 4096 niveaux d'amplitude/phase regroupés dans un quadrant de la constellation totale. Les inverseurs 304 et 305 permettent de reporter ces états sur les trois autres quadrants. La dynamique de l'atténuation apportée sur chaque voie étant limitée, une zone de dépeuplement 320, en forme de croix, apparait le long des axes x et y, dans laquelle la constellation ne comprend pas de points.

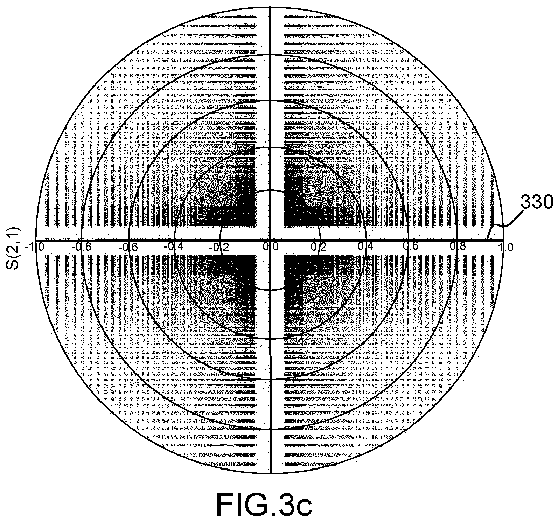

Les nœuds de contrôle à topologie vectorielle s'implémentent très bien en technologie silicium ou silicium-germanium, et présentent de bonnes performances RF. Cependant, la zone de dépeuplement fait que la topologie vectorielle n'apporte pas une couverture homogène sur 360° et sur l'ensemble de la dynamique recherchée. En outre, les points de la constellation situés au-delà du cercle unitaire sont perdus, puisqu'ils correspondent en réalité à une amplification du signal. La constellation doit être normalisée, en supprimant l'ensemble des points situés en dehors du cercle unitaire, tel que représenté à la figure 3c.

Il est possible de réduire la taille de la zone de dépeuplement sans modifier le pas d'atténuation en augmentant le nombre de cellules d'atténuation des nœuds de contrôle, et donc la dynamique totale d'atténuation du nœud de contrôle. Cette solution n'est que peu satisfaisante car l'augmentation de la taille du signal de commande entraine une augmentation de la quantité de données transmises au satellite, de la complexité de la phase de calibrage, de la taille des tables de calibrage, et de la taille des convertisseurs série-parallèle utilisés pour adresser les bits du signal de commande.

Il est également possible de réduire la taille de la zone de dépeuplement en augmentant le pas du bit de poids faible des atténuateurs, de manière à augmenter la dynamique d'amplitude totale de la constellation pour un nombre de bits de commande constant, mais cette solution dégrade la densité des points de la constellation et donc la résolution du système.

La demande de brevet Française FR 1.907.443 décrit un nœud de contrôle, représenté à la figure 4a, basé sur une topologie vectorielle et réduisant la taille de la zone de dépeuplement sans modifier le signal de commande. Pour cela, elle ajoute de nouvelles cellules d'atténuation pilotées par le résultat d'une logique combinatoire opérée sur des bits du signal de commande.

Chaque voie du nœud de contrôle comprend un atténuateur 401/402 à N - 1 cellules d'atténuation Aᵢ, avec *i*∈[1, *N* - 1], configurées pour atténuer le signal radiofréquence d'une valeur prédéterminée en fonction de la valeur 310/311 de N - 1 bits dédiés du signal de commande, et M cellules d'atténuation additionnelles Bⱼ, avec *j ∈* [1,*M*] Les cellules Bⱼ sont activées par le résultat d'une logique combinatoire mise en œuvre sur les bits du signal de commande utilisés pour commander les cellules d'atténuation Aᵢ, ce qui permet d'étendre la dynamique d'amplitude de la constellation sans modifier la résolution initiale fixée par la valeur du bit de poids faible des cellules d'atténuation Aᵢ (et donc sans modifier le pas d'amplitude) ni augmenter le nombre de bits du signal de commande.

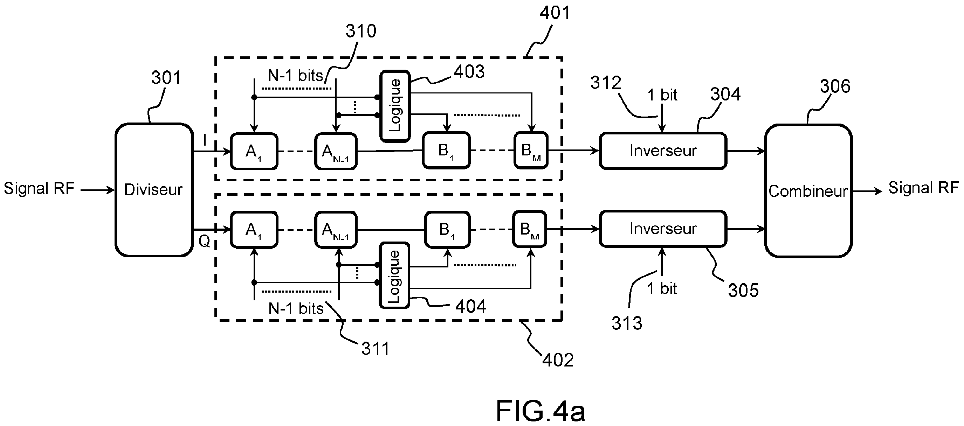

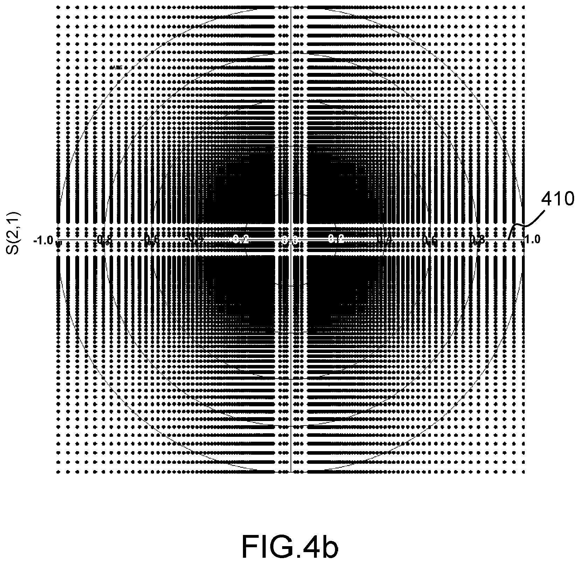

La figure 4b représente la constellation d'états obtenue pour un nœud de contrôle tel que celui de la figure 4a pour un signal de commande sur 2N = 14 bits et avec M=2, dans le cas d'une constellation idéale. On y observe que la zone dépeuplée 410 est réduite par rapport à la zone dépeuplée de la figure 3b.

Cependant, cette solution présente plusieurs défauts. Un premier défaut provient de ce que certains points correspondent à des niveaux d'atténuation très élevés, pour lesquels des phénomènes de couplage entre nœuds de contrôle adjacents peuvent se produire. Ces phénomènes de couplage sont inacceptables en ce que la formation réalisée par un nœud de contrôle influe alors sur l'amplitude/phase des cellules voisines lorsqu'elles travaillent dans la région à forte dynamique, typiquement celle où les cellules d'atténuation supplémentaires Bⱼ sont activés.

Un autre défaut de cette solution provient de ce que les cellules d'atténuation supplémentaires Bⱼ ont généralement des forts niveaux d'atténuation, de telles cellules ayant des pertes RF non négligeables.

Un objet de l'invention est donc de décrire un nœud de contrôle pour antenne réseau permettant de réaliser une constellation amplitude/phase homogène implémentable efficacement en technologie silicium ou silicium-germanium, ne requérant pas d'augmentation du nombre de bits du signal de commande ou de réduction de la résolution de la constellation avec de faibles pertes RF et une bonne robustesse au couplage avec les nœuds de contrôle adjacent de l'antenne réseau. Il adresse ainsi les besoins des systèmes de formateurs de faisceaux d'antennes actives contraints par des capacités de stockage et de traitement numérique (calibrage) limités, par exemple pour des applications satellite bord.

### Résumé de l'invention :

A cet effet, la présente invention décrit un nœud de contrôle pour antenne réseau configuré pour appliquer une atténuation et un déphasage à un signal radiofréquence en fonction d'un signal de commande. Le nœud de contrôle comprend :
- un diviseur quadratique prenant en entrée le signal radiofréquence et configuré pour délivrer au moins un signal en phase et un signal en quadrature de phase sur des voies de transmission distinctes,
- un combineur configuré pour générer un signal radiofréquence de sortie par sommation des signaux transmis sur deux des voies de transmission.

Chaque voie de transmission comprend au moins une cellule d'atténuation configurée pour atténuer le signal radiofréquence transmis sur la voie d'une valeur prédéterminée, chaque cellule d'atténuation étant activée en fonction de la valeur d'un bit dédié du signal de commande. Chaque voie de transmission comprend en outre une première cellule de déphasage configurée pour appliquer un déphasage fixe sur le signal radiofréquence transmis sur la voie , la cellule étant activée en fonction du résultat d'une logique combinatoire opérée sur des bits du signal de commande.

Selon un mode de réalisation, le nœud de contrôle comprend deux voies de transmission distinctes, une voie en phase et une voie en quadrature de phase. Chaque voie de transmission comprend en outre une deuxième cellule de déphasage configurée pour inverser la phase du signal radiofréquence transmis sur la voie, la deuxième cellule de déphasage étant activée en fonction de la valeur d'un bit dédié du signal de commande. Les deuxièmes cellules de déphasage permettent donc de choisir le quadrant dans lequel se situe le point de la constellation. Dans ce mode de réalisation, la logique combinatoire des premières cellules de déphasage est opérée sur les bits du signal de commande dédiés à l'activation des deuxièmes cellules de déphasage.

Dans un autre mode de réalisation, le diviseur quadratique est configuré pour délivrer respectivement sur quatre voies de transmission différentes un signal en phase, un signal inverse du signal en phase, un signal en quadrature de phase et un signal inverse du signal en quadrature de phase. Le combineur est alors configuré pour combiner les signaux transmis sur deux voies de transmission sélectionnées parmi les quatre en fonction de deux bits dédiés du signal de commande. La logique combinatoire pilotant les premières cellules de déphasage est opérée sur les bits du signal de commande dédiés à la sélection des voies de transmission par le combineur.

Selon le mode de réalisation, la logique combinatoire peut être mise en œuvre par un parmi une table préprogrammée, un ensemble de portes logiques et un processeur de traitement de signal.

Avantageusement, le déphasage appliqué par les premières cellules de déphasage est un déphasage non nul inférieur à 90° en valeur absolue, de préférence inférieur à 45° en valeur absolue, et encore plus préférablement égal à 30° en valeur absolue.

L'invention concerne également un réseau de formateurs de faisceaux comprenant une pluralité de nœuds de contrôle selon l'invention, ainsi qu'une antenne réseau comprenant :
- une pluralité d'éléments rayonnants configurés pour transmettre un signal radiofréquence,
- un nœud de contrôle selon l'invention par élément rayonnant, chaque nœud de contrôle étant configuré pour mettre en forme l'amplitude et la phase du signal radiofréquence transmis par l'élément rayonnant auquel il est rattaché en fonction d'un signal de commande.

Enfin, l'invention concerne également un satellite comprenant une antenne réseau selon l'invention.

### Brève description des figures :

L'invention sera mieux comprise et d'autres caractéristiques, détails et avantages apparaîtront mieux à la lecture de la description qui suit, donnée à titre non limitatif, et grâce aux figures annexées qui suivent, données à titre d'exemple, parmi lesquelles :
- la figure 1 représente sommairement les principaux éléments d'une chaîne de transmission comprenant une antenne réseau, à l'émission ;
- la figure 2a est une représentation synoptique d'un nœud de contrôle unitaire à topologie polaire pour antenne réseau ;
- la figure 2b représente la constellation d'états associée à la figure 2a, dans le cas d'une constellation idéale ;
- la figure 3a est une représentation synoptique d'un nœud de contrôle unitaire à topologie vectorielle pour antenne réseau ;
- la figure 3b représente la constellation d'états associée à la figure 3a, dans le cas d'une constellation idéale ;
- la figure 3c représente la constellation d'états de la figure 3b après normalisation ;
- la figure 4a est une représentation synoptique d'un nœud de contrôle unitaire à topologie vectorielle pour antenne réseau telle que décrite dans la demande de brevet FR 1.907.443 ;
- la figure 4b représente la constellation d'états associée à la figure 4a, dans le cas d'une constellation idéale ;
- la figure 5a est une représentation synoptique d'un nœud de contrôle unitaire à topologie vectorielle pour antenne réseau selon un mode de réalisation de l'invention ;
- la figure 5b représente la constellation d'états associée à la figure 5a, dans le cas d'une constellation idéale ;
- la figure 5c représente la constellation d'états de la figure 5b après normalisation ;
- la figure 6 est une représentation synoptique d'un nœud de contrôle unitaire à topologie vectorielle pour antenne réseau selon un autre mode de réalisation de l'invention.

Des références identiques peuvent être utilisées dans des figures différentes lorsqu'elles désignent des éléments identiques ou comparables.

### Description détaillée :

Le nœud de contrôle objet de l'invention a une structure vectorielle, et comprend en outre une cellule de déphasage supplémentaire activée sous condition d'une logique combinatoire. Cette cellule de déphasage supplémentaire permet de réduire la taille de la zone de dépeuplement des constellations vectorielles sans requérir de cellules d'atténuation supplémentaires, sans modifier la taille du pas de la constellation, et sans modifier le nombre de bits du signal de commande.

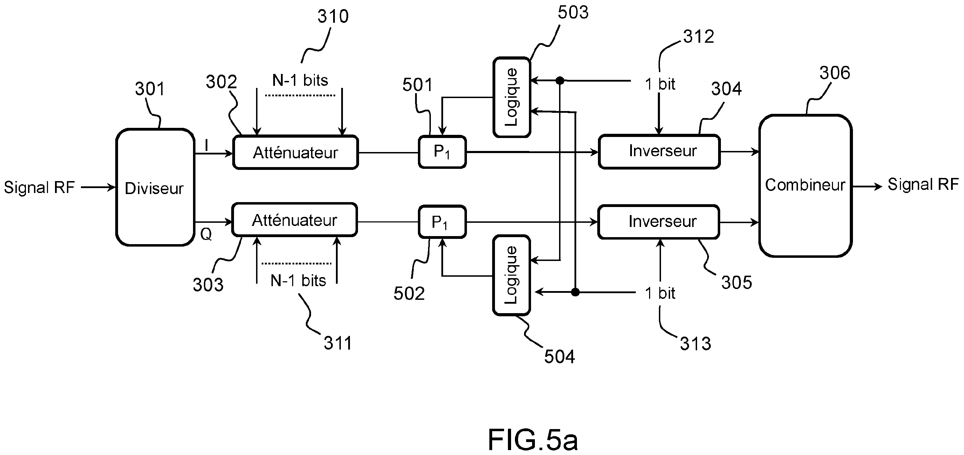

La figure 5a est une représentation synoptique d'un nœud de contrôle unitaire à topologie vectorielle pour antenne réseau selon un mode de réalisation de l'invention.

Le nœud de contrôle selon l'invention prend en entrée un signal RF à émettre sur un élément rayonnant particulier de l'antenne réseau. Il comprend un diviseur quadratique 301 configuré pour générer une voie *I* en phase et une voie Q en quadrature de phase à partir du signal RF. Chaque voie comprend un atténuateur 302/303 et un inverseur 304/305. Les signaux sont ensuite recombinés par un combineur RF 306, qui somme les signaux transmis sur les deux voies.

L'atténuateur 302/303 comprend N - 1 cellules d'atténuation Aᵢ, avec *i ∈* [1, *N* - 1], chaque cellule d'atténuation étant activée en fonction de la valeur 310/311 d'un bit dédié du signal de commande, qui contrôle la génération d'un signal analogique de contrôle rendant active ou inactive la cellule d'atténuation, de manière à rendre cette dernière pilotable par une commande numérique. Afin de garantir un pas d'amplitude constant, l'atténuation double pour chaque cellule.

De manière équivalente, chaque inverseur 304/305, qui réalise un déphasage de 180°, est activé en fonction de la valeur 312/313 d'un bit dédié du signal de commande, qui contrôle la génération d'un signal analogique de contrôle rendant active ou inactive la cellule d'atténuation, afin de rendre cette dernière pilotable par une commande numérique.

Les éléments décrits précédemment correspondent à l'architecture classique d'un nœud de contrôle vectoriel. L'invention introduit en outre une cellule de déphasage P₁ 501/502 sur chacune des voies de transmission. Le nœud de contrôle comprend en outre un ou plusieurs moyens 503/504 de mise en œuvre d'une logique combinatoire sur les bits 312/313 du signal de commande dédiés à l'activation des inverseurs 304/305. Les cellules de déphasage supplémentaires 501 et 502 sont activées en fonction du résultat de la logique combinatoire. La logique combinatoire permet donc d'activer les cellules de déphasages supplémentaires de chaque voie I et Q dans des quadrants soigneusement choisis du cercle trigonométrique.

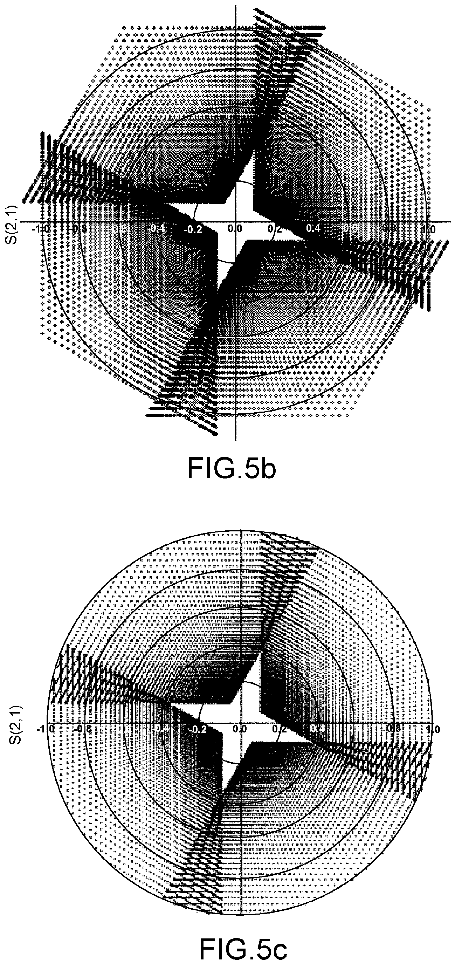

La figure 5b représente la constellation d'états obtenue pour un nœud de contrôle selon le mode de réalisation de la figure 5a, pour un signal de commande sur 2N = 14 bits et en choisissant des cellules de déphasage de -30°, dans le cas d'une constellation idéale.

La logique combinatoire 503 et 504, générant les signaux de commande des cellules de déphasage supplémentaires, est configurée pour activer le déphasage supplémentaire :
- sur la voie I lorsque le quadrant considéré est celui en haut à droite, pour lequel les inverseurs 304 et 305 sont désactivés, et lorsque le quadrant considéré est celui en bas à gauche, pour lequel les inverseurs 304 et 305 sont activés,
- sur la voie Q lorsque le quadrant considéré est celui en bas à droite ou celui en haut à gauche, pour lesquels seulement un des inverseurs 304 et 305 est activé.

Cette logique peut être rapportée directement à la valeur des deux bits 312 et 313 des signaux de commande :
- voie I : la cellule de déphasage supplémentaire 501 est activée lorsque *xor*(*bit* 312, *bit* 313) = 0 ;
- voie Q : la cellule de déphasage supplémentaire 502 est activée lorsque *xor(bit* 312, *bit* 313) = 1.

D'autres choix auraient permis de parvenir au même résultat, par exemple en considérant des cellules de déphasage de +30° et la logique combinatoire suivante :
- Voie I : la cellule de déphasage supplémentaire 501 est activée lorsque *xor*(*bit* 312, *bit* 313) = 1 ;
- Voie Q : la cellule de déphasage supplémentaire 502 est activée lorsque *xor(bit* 312, *bit* 313) = 0.

On observe sur la figure 5b que les différents quadrants de la constellation ne forment plus un carré parfait mais un losange, dans lequel les états de la constellation sont régulièrement répartis. L'angle du losange le plus proche du centre de la constellation n'est plus un angle rectangle mais un angle obtus : les quadrants ainsi définis sont donc élargis selon un axe par rapport aux quadrants des constellations vectorielles classiques. La résolution en amplitude est inchangée par rapport aux constellations vectorielles classiques, le pas d'amplitude restant constant. La résolution en phase est légèrement dégradée mais demeure également à pas constant. Les quadrants se rapprochent donc les uns des autres, jusqu'à se superposer par endroits, ce qui a pour effet de réduire la taille de la zone de dépeuplement 520 en une zone en forme d'étoile correspondant aux points de plus forte atténuation, qui sont les points les moins importants de la constellation, à l'origine des problèmes de couplage des nœuds de contrôle. L'ensemble forme une constellation s'inscrivant dans un octogone.

Le nœud de contrôle selon l'invention répond donc au besoin de remplissage des zones dépeuplées en forme de croix des constellations vectorielles selon l'état de l'art, sans requérir de bits de commande supplémentaires, et sans insérer de cellules d'atténuation supplémentaires. De cette manière, elle s'affranchit des problèmes de couplage et de pertes RF des nœuds de contrôle tels que celui décrit à la figure 4a. Les cellules supplémentaires insérées sont des cellules de déphasage de faible valeur, qui n'ont que très peu de pertes RF et sont implémentables en technologie silicium ou silicium-germanium. Leur faible nombre et le fait qu'elles soient commandées par une logique combinatoire très simple font qu'elles ne viennent que très peu augmenter la surface du nœud de contrôle. La constellation d'états obtenue permet de balayer 360° par pas d'amplitude et de phase de tailles constantes, et la dynamique d'amplitude est la même que celle obtenue pour les topologies vectorielles.

En outre, le nœud de contrôle selon l'invention s'inscrit dans un octogone, tendant vers un cercle, ce qui augmente le nombre de points disponibles après normalisation de la constellation dans le cercle polaire par rapport aux topologies vectorielles connues. De ce fait, la translation des points situés aux quatre coins extérieurs de la constellation vectorielle standard vers l'intérieur du cercle polaire, réalisée par l'ajout de cellules de déphasage supplémentaires, augmente la résolution de la constellation vectorielle dans les zones de recouvrement, alors que ces points sont perdus après normalisation dans une constellation vectorielle standard. L'invention permet donc d'améliorer significativement la précision d'amplitude/phase par rapport aux topologies vectorielles classiques.

La figure 5c représente la constellation d'états obtenue pour la figure 5b après normalisation. Dans ce cas précis, la normalisation est faite à -4dB. On observe que le nombre de points perdus après la normalisation est beaucoup plus faible que dans le cas de la topologie vectorielle améliorée de la figure 3c.

Le choix de la valeur du déphasage supplémentaire appliqué impacte directement la taille de la zone de dépeuplement et le taux de superposition des différentes constellations. Cette valeur est donc à évaluer au cas par cas en fonction des exigences opérationnelles, de manière à réaliser le meilleur compromis entre la dynamique de la constellation et la résolution du système. Ce déphasage supplémentaire est dans tous les cas inférieur à 90° (en valeur absolue), et typiquement inférieur à 45°. Dans les exemples donnés, il vaut 30° en valeur absolue.

La logique combinatoire 503/504 est très simple puisqu'il s'agit uniquement de portes xor. Elle peut être mise en œuvre par n'importe quel moyen : une table préprogrammée, un ensemble de portes logiques ou un composant de calculs numériques (comme par exemple un processeur numérique de signal, en anglais DSP pour « *Digital Signal Processor* » ou tout autre dispositif équivalent permettant de réaliser des calculs numériques). Les deux blocs de logique combinatoire 503 et 504 peuvent être implémentés séparément ou dans un même composant.

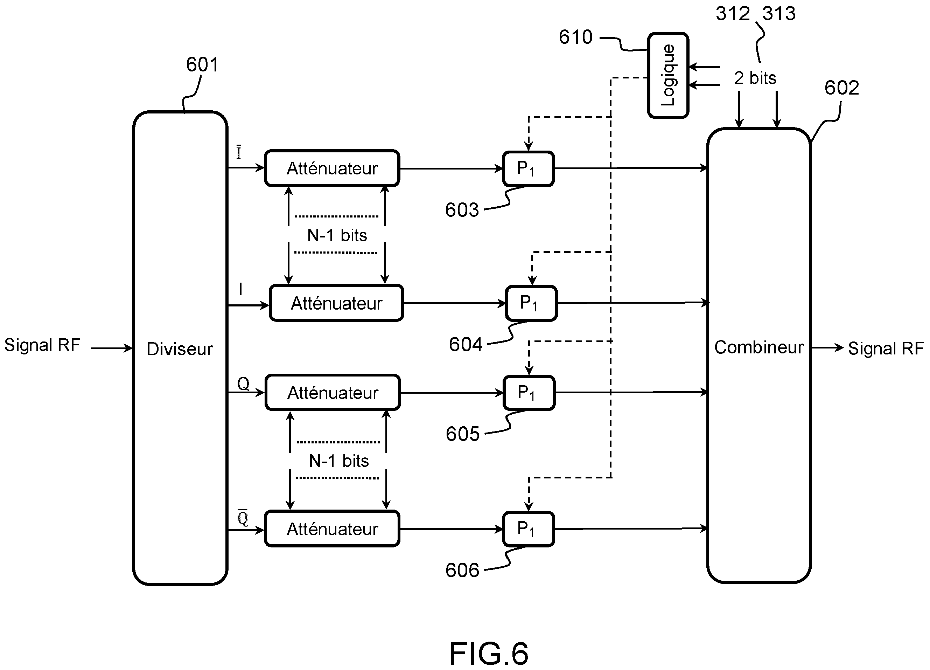

La figure 6 est une représentation synoptique d'un nœud de contrôle à topologie vectorielle pour antenne réseau selon un autre mode de réalisation de l'invention.

Ce mode de réalisation, qui donne les mêmes résultats que celui présenté à la figure 5a, s'en différencie en ce que le diviseur quadratique 601 est configuré pour générer quatre voies de transmissions distinctes à partir du signal RF : une voie *I* en phase, une voie *I̅* inverse de la voie *I*, une voie Q en quadrature de phase, et une voie *Q̅* inverse de la voie Q. Chacune des voies de transmission comprend un atténuateur à N - 1 cellules d'atténuations commandé par N - 1 bits du signal de commande, ainsi qu'une cellule de déphasage supplémentaire 603 à 606, activées par une logique programmable 610. De manière équivalente, la logique programmable peut être séparée en quatre blocs répartis sur les différentes voies de transmission. Le nœud de contrôle comprend également un combineur 602 configuré pour sélectionner une première voie parmi les voies *I* et *I̅,* et une deuxième voie parmi les voies Q et *Q̅,* et pour combiner ces deux voies afin de fournir le signal RF de sortie du nœud de contrôle. La sélection des voies au sein du combineur est réalisée à partir de deux bits dédiés du signal de commande, ces deux bits étant également les entrées de la logique combinatoire 610.

De nombreuses variantes aux modes de réalisation décrits sont facilement concevables pour l'homme du métier, par exemple en permutant les positions des atténuateurs et des inverseurs. En outre, le dispositif selon l'invention, dans lequel une cellule supplémentaire de déphasage est ajoutée, est totalement compatible avec le dispositif décrit dans la demande de brevet FR 1.907.443, le nœud de contrôle vectoriel pouvant être complété à la fois par des cellules d'atténuation et des cellules de phase supplémentaires.

L'invention porte également sur :
- un réseau de formateurs de faisceaux comprenant une pluralités de nœuds de contrôles tels que décrits par l'invention. Le réseau de formateur de faisceaux est placé entre la chaîne d'émission des signaux radio et les éléments rayonnants d'une antenne réseau, et permet d'appliquer une consigne en amplitude et en phase sur les signaux transmis à chacun des éléments rayonnants de l'antenne en fonction d'un signal de consigne ;
- une antenne réseau comprenant une pluralité d'éléments rayonnants 106 configurés pour transmettre un signal radiofréquence, et un nœud de contrôle selon l'invention par élément rayonnant, chaque nœud de contrôle étant configuré pour mettre en forme l'amplitude et la phase du signal radiofréquence transmis par l'élément rayonnant auquel il est rattaché en fonction d'un signal de commande ;
- un satellite comprenant une telle antenne réseau.

## Revendications

1. Nœud de contrôle pour antenne réseau (103) configuré pour appliquer une atténuation et un déphasage à un signal radiofréquence en fonction d'un signal de commande, ledit nœud de contrôle comprenant :
- un diviseur quadratique (301, 601) prenant en entrée le signal radiofréquence et configuré pour délivrer au moins un signal en phase et un signal en quadrature de phase sur des voies de transmission distinctes,
- un combineur (306, 602) configuré pour générer un signal radiofréquence de sortie par sommation des signaux transmis sur deux des voies de transmission,
chaque voie de transmission comprenant au moins une cellule d'atténuation (302, 303) configurée pour atténuer le signal radiofréquence transmis sur la voie d'une valeur prédéterminée, chaque cellule d'atténuation étant activée en fonction de la valeur d'un bit dédié (310, 311) du signal de commande, le nœud de contrôle étant **caractérisé en ce que** chaque voie de transmission comprend en outre une première cellule de déphasage (501, 502, 603, 604, 605, 606) configurée pour appliquer un déphasage fixe sur le signal radiofréquence transmis sur la voie, activée en fonction du résultat d'une logique combinatoire (503, 504, 610) opérée sur des bits du signal de commande (312, 313).

2. Nœud de contrôle selon la revendication 1, comprenant deux voies de transmission distinctes, une voie en phase et une voie en quadrature de phase, chaque voie de transmission comprenant en outre une deuxième cellule de déphasage (304, 305) configurée pour inverser la phase du signal radiofréquence transmis sur la voie, la deuxième cellule de déphasage étant activée en fonction de la valeur d'un bit dédié (312, 313) du signal de commande, et dans lequel la logique combinatoire (503, 504) est opérée sur les bits du signal de commande (312, 313) dédiés à l'activation des deuxièmes cellules de déphasage.

3. Nœud de contrôle selon la revendication 1, dans lequel le diviseur quadratique (601) est configuré pour délivrer respectivement sur quatre voies de transmission différentes un signal en phase, un signal inverse du signal en phase, un signal en quadrature de phase et un signal inverse du signal en quadrature de phase, dans lequel le combineur (602) est configuré pour combiner les signaux transmis sur deux voies de transmission sélectionnées parmi les quatre en fonction de deux bits dédiés (312, 313) du signal de commande, et dans lequel la logique combinatoire (610) est opérée sur les bits du signal de commande (312, 313) dédiés à la sélection des voies de transmission.

4. Nœud de contrôle selon l'une des revendications précédentes, dans lequel la logique combinatoire (503, 504, 610) est mise en œuvre par un parmi une table préprogrammée, un ensemble de portes logiques et un processeur de traitement de signal.

5. Nœud de contrôle selon l'une des revendications précédentes, dans lequel le déphasage appliqué par les premières cellules de déphasage est un déphasage non nul inférieur à 90° en valeur absolue, de préférence inférieur à 45° en valeur absolue, et encore plus préférablement sensiblement égal à 30° en valeur absolue.

6. Réseau de formateurs de faisceaux comprenant une pluralité de nœuds de contrôle selon l'une des revendications précédentes.

7. Antenne réseau comprenant :
- une pluralité d'éléments rayonnants (106) configurés pour transmettre un signal radiofréquence,
- un nœud de contrôle selon l'une des revendications 1 à 5 par élément rayonnant (104), chaque nœud de contrôle étant configuré pour mettre en forme l'amplitude et la phase du signal radiofréquence transmis par l'élément rayonnant auquel il est rattaché en fonction d'un signal de commande.

8. Satellite comprenant une antenne réseau selon la revendication précédente.
